# DEMANDE DE BREVET EUROPEEN

(11) **EP 0 646 512 A1**
(43) Date de publication de la demande: **05.04.1995**
(21) Numéro de dépôt: 94402215.1
(22) Date de dépôt: 04.10.1994
(51) Int. Cl.: B61H 7/08, B61F 5/52

(54) **Dispositif de support pour frein à courants de Foucault et train de roulement pour véhicule ferroviaire comportant un tel dispositif**

(30) Priorité: 05.10.1993 FR 9311849
(71) Demandeur: GEC ALSTHOM TRANSPORT SA, F-75016 Paris (FR)
(72) Inventeur: Nast, Jean-Daniel, F-71200 Le Creusot (FR)
(74) Mandataire: Fournier, Michel

(57) **Abrégé**

La présente invention concerne un dispositif de support pour frein à courants de Foucault sur lequel est fixé au moins un patin linéaire de freinage (6,7) à courants de Foucault définissant un entrefer avec un rail (8,9) auquel ledit patin linéaire est associé; ledit dispositif de support pour frein comprenant:
- une première (1) demi-poutre, et
- une seconde (2) demi-poutre,

coopérant entre elles par des moyens d'articulation (3);
- des moyens de déplacement vertical (10) dudit dispositif de support pour frein, et
- des moyens de guidage vertical (11) dudit dispositif de support pour frein,

coopérant entre eux; et
- au moins un bras d'appui (12) solidaire de l'une des extrémités desdites demi-poutres (1,2),
l'extrémité de chacun desdits bras d'appui coopérant avec un moyen de référence (17) solidaire de l'une des boîtes d'essieux (18) de manière à imposer une valeur prédéterminée audit entrefer lorsque ledit dispositif de support pour frein est en phase de freinage.

## Description

La présente invention concerne les trains de roulement pour véhicules ferroviaires, comportant un frein à courants de Foucault, coopérant avec un rail, dont le corps de freinage est maintenu respectivement abaissable ou montable, au moyen d'un dispositif d'entraînement, entre une position supérieure de repos et une position inférieure active, et est en appui par l'intermédiaire de butées, le dispositif d'entraînement et les butées étant disposés sur un support longitudinal du châssis du train de roulement.

Le brevet EP-A-0 299 318 de la Société DUEWAG décrit un train de roulement pour véhicules ferroviaires appartenant au domaine de l'invention défini précédemment.

Un premier enseignement de ce brevet concerne un type de suspension habituellement désigné par "articulation basse". Dans une telle articulation, il existe une distance de quelques millimètres seulement entre le bord supérieur du rail et le corps de freinage retenu sur un train de roulement par l'intermédiaire de ressorts hélicoïdaux. Cette faible distance est couverte par enclenchement du courant électrique destiné au frein de voie et s'opposant à la force des ressorts hélicoïdaux, de sorte que le corps de freinage repose sur le rail. Après déclenchement du courant, les ressorts ramènent le corps de freinage, par traction, à sa position de repos.

Un second enseignement de ce brevet concerne un autre type de suspension de freins de voie qualifié d'"articulation haute". La distance entre le bord supérieur du rail et le corps de freinage est supérieure à la course élastique des ressorts hélicoïdaux. Des dispositifs d'entraînement sont alors employés pour abaisser et soulever le corps de freinage. Ces dispositifs d'entraînement sont reliés à un support longitudinal du châssis du train de roulement, qui n'accomplit pas de mouvements élastiques par rapport au rail.

Le train de roulement pour véhicules ferroviaires, faisant l'objet du brevet européen mentionné ci-dessus, se caractérise par le fait que le corps de freinage est verrouillé à demeure dans un plan horizontal, dans sa position de repos, par l'intermédiaire d'un dispositif de butée connu, et est suspendu avec amortissement vertical par l'entremise d'au moins deux éléments élastiques interposés entre le dispositif de butée et le support longitudinal.

Ce brevet enseigne également le fait que dans un train de roulement équipé d'un frein à courants de Foucault, les butées sont munies d'un logement qui limite la distance comprise entre le rail et le corps de freinage occupant une position active.

La présente invention porte, plus précisément, sur un dispositif de support pour frein à courants de Foucault et sur un train de roulement pour véhicule ferroviaire comportant un tel dispositif.

Le brevet EP-A-0 299 318 de la Société DUEWAG décrit un corps de freinage par courants de Foucault prenant appui sur un châssis de bogie. Le châssis de bogie est monté sur des boîtes d'essieux sans suspension primaire. Le corps de freinage par courants de Foulcaut est commandé et guidé par rapport au châssis de bogie.

Conformément à l'état de la technique cité, le corps de freinage par courants de Foulcaut est également référencé par rapport au châssis de bogie.

Un inconvénient de la structure du corps de freinage par courants de Foucault de l'état de la technique est que les masses restent solidaires de la masse des essieux non suspendus.

Aussi un but du dispositif de support pour frein à courants de Foucault de l'invention est-il de pouvoir changer de référence entre la phase de freinage et lors de la phase hors freinage en pouvant suspendre la masse du frein en fonctionnement normal.

Un autre but du dispositif de support pour frein à courants de Foucault de l'invention est-il de permettre l'absorption de toutes les déformations auxquelles il peut être soumis.

Conformément à une caractéristique essentielle du dispositif de support pour frein à courants de Foucault de l'invention, celui-ci comprend une première et une seconde demi-poutre lesquelles coopèrent entre elles par des moyens d'articulation de manière à absorber toutes les déformations dudit dispositif de support pour frein.

Conformément à une autre caractéristique essentielle du dispositif de support pour frein à courants de Foucault sur lequel est fixé au moins un patin linéaire de freinage à courants de Foucault définissant un entrefer par rapport à un rail auquel ledit patin linéaire est associé; le dispositif de support pour frein de l'invention comprend:
- une première demi-poutre, et
- une seconde demi-poutre,
   coopérant entre elles par des moyens d'articulation de manière à absorber toutes les déformations dudit support pour frein;
- des moyens de déplacement vertical dudit dispositif de support pour frein, et
- des moyens de guidage vertical dudit dispositif de support pour frein,
   coopérant entre eux de manière à définir une phase hors freinage durant laquelle ledit dispositif de support pour frein est amené en position haute et une phase de freinage durant laquelle ledit dispositif de support pour frein est amené en position basse; et
- au moins un bras d'appui solidaire de l'une des extrémités desdites demi-poutres,
   l'extrémité de chacun desdits bras d'appui coopérant avec un moyen de référence, lequel lui est associé, solidaire de l'une des boîtes d'essieux de manière à imposer une valeur prédéterminée audit entrefer lorsque ledit dispositif de support pour frein est en phase de freinage.

Les moyens d'articulation se composent d'une traverse en matériau composite disposée entre ladite première et ladite seconde demi-poutre.

Conformément à une autre caractéristique essentielle de l'invention, le dispositif de support pour frein à courants de Foucault comprend une première et une seconde demi-poutre lesquelles coopèrent entre elles par des moyens d'articulation de manière à absorber toutes les déformations dudit dispositif de support pour frein caractérisé en ce que lesdits moyens d'articulation se composent d'une traverse en matériau composite disposée entre ladite première et ladite seconde demi-poutre.

Conformément à d'autres caractéristiques du dispositif de support pour frein de l'invention:
- la traverse est de forme générale parallélépipédique et comporte un évidemment en son centre de forme générale parallélépipédique;
- la traverse est en verre époxi ou en carbone;
- les moyens d'articulation se composent d'au moins une rotule élastique disposée entre ladite première et ladite seconde demi-poutre;
- l'une au moins des demi-poutres a une structure en forme générale de T constituée d'une chape longitudinale et d'un bras radial, la rotule élastique étant disposée à l'extrémité du bras radial.

Un avantage du dispositif de support pour frein à courants de Foucault selon l'invention est de rendre mobile l'ensemble de l'équipement de freinage et de minimiser les masses.

D'autres buts, caractéristiques et avantages de l'invention apparaîtrons à la lecture de la description de deux modes préférés de réalisation du dispositif de support pour frein, description faite en liaison avec les dessins dans lesquels:
- la figure 1 est une vue latérale schématique du train de roulement conforme à l'état de la technique cité précédemment et comportant un corps de freinage par courants de Foucault;
- la figure 2 est une vue latérale d'un train de roulement comportant un dispositif de support pour frein à courants de Foucault conforme à l'invention;
- la figure 3 est une vue en perspective du dispositif de support pour frein à courants de Foucault de l'invention selon un premier mode préféré de réalisation;
- la figure 4 est une représentation latérale en coupe d'une articulation élastique utilisée dans le premier mode préféré de réalisation;
- la figure 5 est une vue en perspective du dispositif de support pour frein à courants de Foucault de l'invention selon un second mode préféré de réalisation; et
- la figure 6 est une représentation en plan en coupe d'un bras d'appui disposé à l'extrémité des demi-poutres.

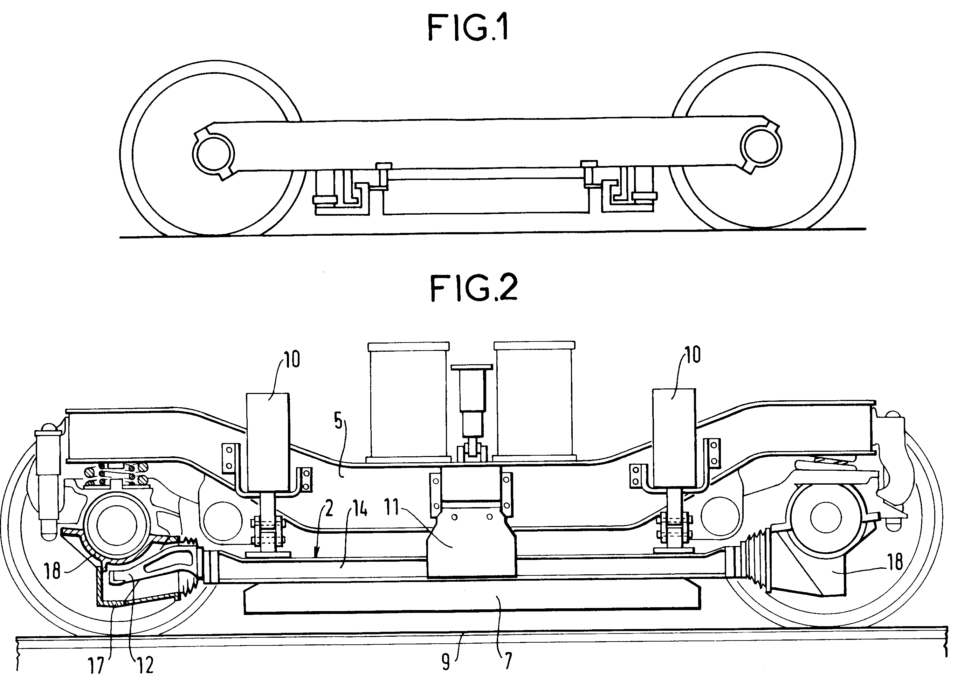

Le train de roulement, comportant un corps de freinage par courants de Foucault, conforme à l'état de la technique cité précédemment est représenté en vue latérale schématique à la figure 1.

Le corps de freinage prend appui sur un châssis de bogie relié aux boîtes d'essieux.

Le corps de freinage est commandé, guidé et référencé par rapport au châssis de bogie.

La figure 2 est une vue latérale du train de roulement comportant un dispositif de support pour frein à courants de Foucault conforme à l'invention.

Seuls sont apparents sur cette figure 2 une demi-poutre 2, appartenant au dispositif de support pour frein, constituée entre autre d'une chape 14 sous laquelle est disposé un patin à courants de Foucault 9.

Des moyens de déplacement vertical 10 et des moyens de guidage vertical 11 du dispositif de support pour frein sont solidaires d'un châssis de bogie 5.

A l'une au moins des extrémités de la chape est disposé un bras d'appui 12 coopérant avec une surface de référence 17 disposée dans une boîte d'essieu 18 du bogie du véhicule ferroviaire.

Il ressort de la description précédente, ainsi que de la description qui va suivre, que le châssis de bogie 5 est suspendu sur les essieux du bogie.

Le dispositif de support pour frein est commandé par rapport au châssis mobile 5. De plus, la position du dispositif de support pour frein est référencée par rapport au plan de référence 17, lequel n'est pas solidaire du châssis mobile 5 et n'est donc pas défini par rapport à une structure mobile.

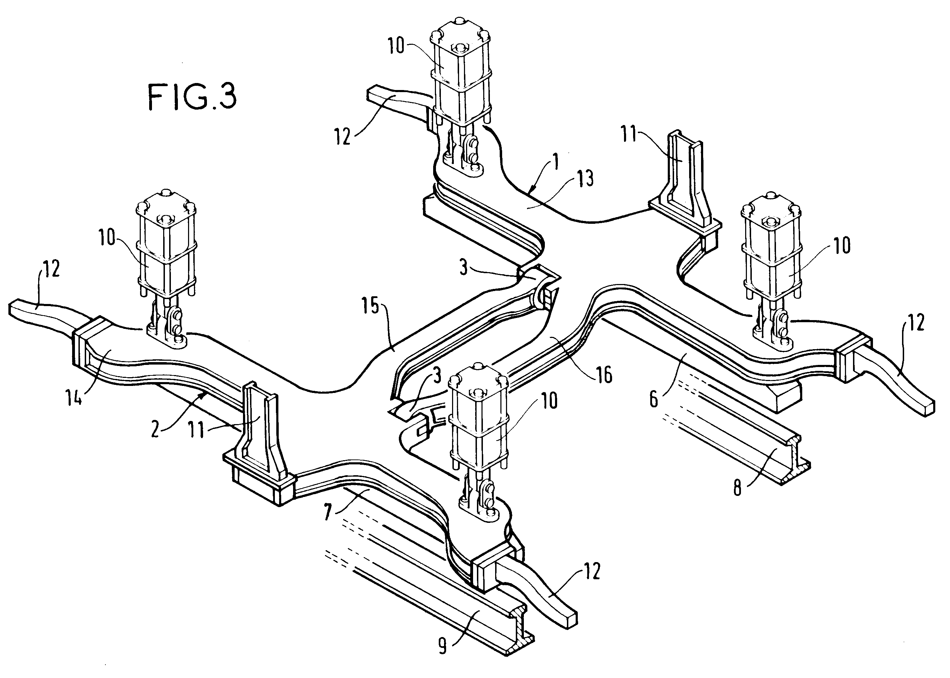

La figure 3 est une vue en perspective du dispositif de support pour frein à courants de Foucault de l'invention selon un premier mode préféré de réalisation.

Le dispositif de support pour frein à courants de Foucault comprend, principalement, une première 1 et une seconde 2 demi-poutre.

Les demi-poutres coopèrent entre elles par des moyens d'articulation 3 de manière à absorber toutes les déformations dudit dispositif de support pour frein.

Par déformation, il faut comprendre les déformations accompagnant les mouvements dits gauches de voies, les torsions transversales ainsi que les rotations verticales appliquées au dispositif de support pour frein.

Un ou plusieurs patins linéaires de freinage 6,7 à courants de Foucault sont disposés sous le dispositif de support pour frein à courants de Foucault. Chacun des patins linéaires de freinage 6,7 fait face à un rail 8,9 auquel il est associé.

Ces patins linéaires de freinage 6,7 définissent un entrefer avec le rail 8,9 auquel ils sont associés.

Le dispositif de support pour frein comprend également des moyens de déplacement vertical 10 et des moyens de guidage vertical 11 du dispositif de support pour frein.

Les moyens de déplacement vertical 10 du dispositif de support pour frein et les moyens de guidage vertical 11 du dispositif de support pour frein coopèrent entre eux de manière à définir une phase hors freinage et une phase de freinage.

Durant la phase hors freinage le dispositif de support pour frein est amené en position haute. Durant la phase de freinage le dispositif de support pour frein est amené en position basse.

Les moyens de déplacement vertical se composent, par exemple, de quatre vérins pneumatiques.

Les moyens de guidage vertical ont pour fonction de reprendre les efforts longitudinaux appliqués au dispositif de support pour frein.

Enfin, le dispositif de support pour frein comprend au moins un bras d'appui 12 solidaire de l'une des extrémités des demi-poutres 1,2.

Conformément au premier mode préféré de réalisation de l'invention représenté à la figure 3, les moyens d'articulation se composent d'au moins une rotule élastique 3 disposée entre la première 1 et la seconde 2 demi-poutre.

L'une au moins des demi-poutres a une structure en forme générale de T. L'une au moins des demi-poutres est alors constituée d'une chape longitudinale 13,14 et d'un bras radial 15,16.

Les bras d'appui 12 sont disposés, respectivement, aux extrémités des chapes longitudinales 13,14 de chacune des demi-poutres 1,2.

Les rotules sont disposée, respectivement, à l'extrémité libre des bras radiaux 15,16 de chacune des demi-poutres 1,2.

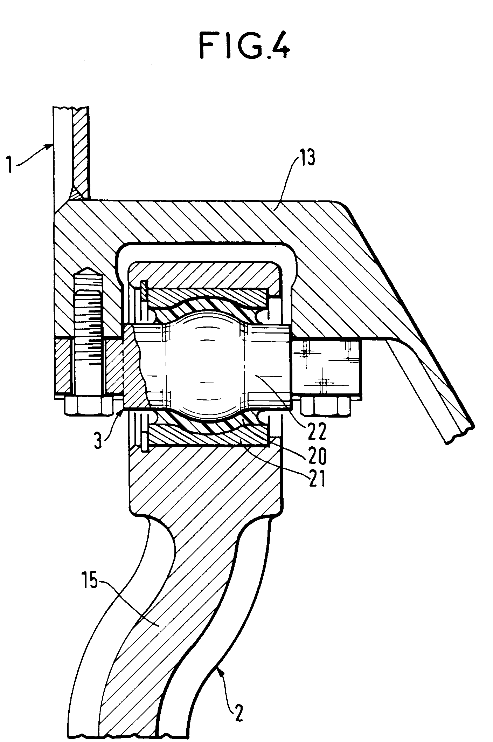

La figure 4 est une représentation latérale en coupe d'une articulation élastique utilisé dans le premier mode préféré de réalisation.

L'articulation élastique est constituée d'une rotule 3 reliant les deux demi-poutres 1,2 constituant le dispositif de support pour frein à courants de Foucault de l'invention. Plus précisément, la rotule 3 est solidaire de l'extrémité libre du bras radial 15 de l'une des demi-poutres et est solidaire de la chape longitudinale 13 de l'autre demi-poutre.

La rotule 3 se compose d'une liaison élastique 20, par exemple en caoutchouc, sertie entre une base 21 solidaire de l'extrémité libre du bras radial 15 et un axe 22 solidaire de la chape longitudinale 13.

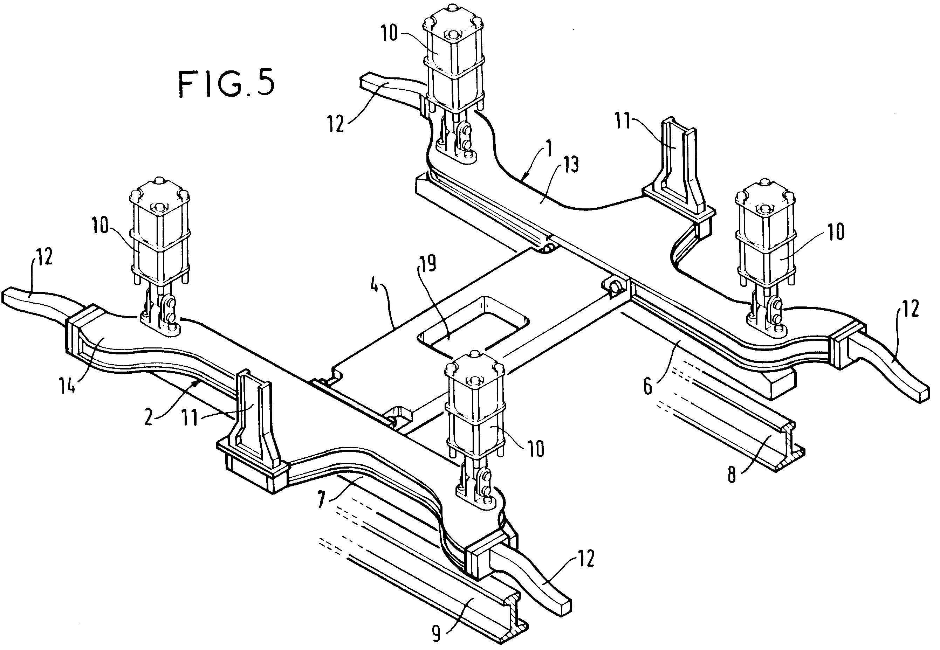

La figure 5 est une vue en perspective du dispositif de support pour frein à courants de Foucault de l'invention selon un second mode préféré de réalisation.

Les éléments décrits précédemment portent les mêmes références.

Le dispositif de support pour frein comprend une première demi-poutre 1 et une seconde demi-poutre 2 coopérant entre elles par des moyens d'articulation 3.

Le dispositif de support pour frein à courants de Foucault comporte au moins un patin linéaire de freinage 6,7 à courants de Foucault définissant un entrefer avec un rail 8,9.

Le dispositif de support pour frein comprend également des moyens de déplacement vertical 10 dudit dispositif de support pour frein et des moyens de guidage vertical 11 dudit dispositif de support pour frein.

Enfin, le dispositif de support pour frein comprend au moins un bras d'appui 12 solidaire de l'une des extrémités des demi-poutres 1,2.

Conformément au second mode préféré de réalisation de l'invention représenté à la figure 5, les moyens d'articulation se composent d'une traverse 4 disposée entre la première 1 et la seconde 2 demi-poutre.

A titre d'exemple, la traverse 4 est de forme générale parallélépipédique et comporte ou non un évidemment 19 en son centre de forme générale parallélépipédique.

La traverse 4 est, de préférence, en un matériau composite, par exemple en verre époxi ou en carbone.

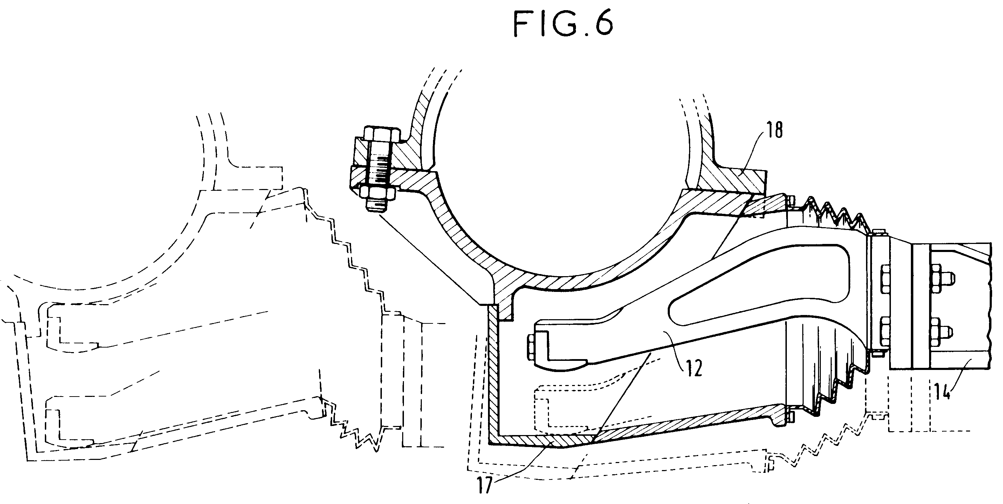

La figure 6 est une représentation en plan en coupe d'un bras d'appui 12 disposé à l'extrémité des demi-poutres.

Le bras d'appui 12 est représenté le dispositif de support pour frein étant en phase hors freinage et en phase freinage et la boîte d'essieu étant dans deux positions différentes.

L'extrémité de chacun des bras d'appui 12 coopèrent avec un moyen de référence 17, moyen qui lui est associé.

Le moyen de référence 17 est solidaire de l'une des boîtes d'essieux 18 et a pour fonction essentielle d'imposer une valeur prédéterminée à l'entrefer lorsque le dispositif de support pour frein est en phase de freinage.

Le dispositif de support pour frein à courants de Foucault est susceptible d'être utilisé, par exemple, sur un train de roulement pour véhicule ferroviaire.

## Revendications

1. Dispositif de support pour frein à courants de Foucault comprenant une première (1) et une seconde (2) demi-poutre lesquelles coopèrent entre elles par des moyens d'articulation (3,4) de manière à absorber toutes les déformations dudit dispositif de support pour frein.

2. Dispositif de support pour frein à courants de Foucault sur lequel est fixé au moins un patin linéaire de freinage (6,7) à courants de Foucault définissant un entrefer avec un rail (8,9) auquel ledit patin linéaire est associé; ledit dispositif de support pour frein comprenant:
- une première (1) demi-poutre, et
- une seconde (2) demi-poutre,
coopérant entre elles par des moyens d'articulation (3) de manière à absorber toutes les déformations dudit dispositif de support pour frein;
- des moyens de déplacement vertical (10) dudit dispositif de support pour frein, et
- des moyens de guidage vertical (11) dudit dispositif de support pour frein,
coopérant entre eux de manière à définir une phase hors freinage durant laquelle ledit dispositif de support pour frein est amené en position haute et une phase de freinage durant laquelle ledit dispositif de support pour frein est amené en position basse; et
- au moins un bras d'appui (12) solidaire de l'une des extrémités desdites demi-poutres (1,2),
l'extrémité de chacun desdits bras d'appui coopérant avec un moyen de référence (17), lequel lui est associé, solidaire de l'une des boîtes d'essieux (18) de manière à imposer une valeur prédéterminée audit entrefer lorsque ledit dispositif de support pour frein est en phase de freinage.

3. Dispositif de support pour frein selon l'une quelconque des revendications 1 ou 2 dans lequel lesdits moyens d'articulation (4) se composent d'une traverse en matériau composite disposée entre ladite première (1) et ladite seconde (2) demi-poutre.

4. Dispositif de support pour frein à courants de Foucault comprenant une première (1) et une seconde (2) demi-poutre lesquelles coopèrent entre elles par des moyens d'articulation (3,4) de manière à absorber toutes les déformations dudit dispositif de support pour frein caractérisé en ce que lesdits moyens d'articulation (4) se composent d'une traverse en matériau composite disposée entre ladite première (1) et ladite seconde (2) demi-poutre.

5. Dispositif de support pour frein selon l'une des revendications 3 et 4 dans lequel la traverse (4) est de forme générale parallélépipédique et comporte un évidement (19) en son centre de forme générale parallélépipédique.

6. Dispositif de support pour frein selon l'une quelconque des revendications 4 et 5 dans lequel la traverse (4) est en verre époxi ou en carbone.

7. Dispositif de support pour frein selon l'une quelconque des revendications 1 ou 2 dans lequel lesdits moyens d'articulation (3) se composent d'au moins une rotule élastique disposée entre ladite première (1) et ladite seconde (2) demi-poutre.

8. Dispositif de support pour frein selon la revendication 7 dans lequel l'une au moins des demi-poutres (1,2) a une structure en forme générale de T constituée d'une chape longitudinale (13,14) et un bras radial (15,16), les rotules étant disposée, respectivement, à l'extrémité dudit bras radial (15,16).

9. Train de roulement pour véhicule ferroviaire comportant un dispositif de support pour frein à courants de Foucault selon l'une quelconque des revendications précédentes.
